(19) Europäisches Patentamt
European Patent Office
Office européen des brevets

(11) **EP 2 895 939 B1**

(12) **FASCICULE DE BREVET EUROPEEN**

(45) Date de publication et mention
de la délivrance du brevet:
**02.11.2016 Bulletin 2016/44**

(21) Numéro de dépôt: **13776530.1**

(22) Date de dépôt: **12.09.2013**

(51) Int Cl.:
*G06F 3/041* *(2006.01)*      *G06F 3/043* *(2006.01)*

(86) Numéro de dépôt international:
**PCT/FR2013/052094**

(87) Numéro de publication internationale:
**WO 2014/041305 (20.03.2014 Gazette 2014/12)**

(54) **SYSTEME ET PROCEDE DE DETECTION DE L'ACTIONNEMENT D'UNE FONCTION MATERIALISEE PAR UN TRAJET PREDETERMINE SUR UNE SURFACE TACTILE D'UN OBJET**

SYSTEM UND VERFAHREN ZUR ERFASSUNG DER BETÄTIGUNG EINER FUNKTION IN FORM EINES VORBESTIMMTEN WEGES AUF EINER BERÜHRUNGSEMPFINDLICHEN OBERFLÄCHE EINES OBJEKTS

SYSTEM AND METHOD FOR DETECTING THE ACTUATION OF A FUNCTION IN THE FORM OF A PRE-DETERMINED PATH ON A TOUCH-SENSITIVE SURFACE OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2012 FR 1258676**

(43) Date de publication de la demande:
**22.07.2015 Bulletin 2015/30**

(73) Titulaires:
• **Commissariat à l'Énergie Atomique et aux Énergies Alternatives**
**75015 Paris (FR)**
• **Renault S.A.S.**
**92100 Boulogne-Billancourt (FR)**

(72) Inventeurs:
• **CHALUBERT, Gérard**
**78960 Voisins Le Bretonneux (FR)**
• **NIKOLOVSKI, Jean-Pierre**
**13620 Carry-le-Rouet (FR)**
• **GUENARD, Nicolas**
**91191 Gif-sur-Yvette Cedex (FR)**
• **BRELAUD, Olivier**
**78650 Saulx-Marchais (FR)**
• **ALEXANDER, Jean-Philippe**
**37520 La Riche (FR)**

(74) Mandataire: **Bonnet, Michel**
**Cabinet Bonnet**
**93, rue Réaumur - Boîte 10**
**75002 Paris (FR)**

(56) Documents cités:
**FR-A1- 2 916 545     FR-A1- 2 948 471**
**US-B1- 6 741 237**

## Description

La présente invention concerne un système de détection de l'actionnement d'une fonction matérialisée par un trajet prédéterminé sur une surface tactile d'un objet. Elle concerne également un procédé mis en oeuvre par ce système.

Il est connu de l'état de la technique différents systèmes de détection et de localisation de touchers sur une surface tactile, comportant des moyens d'émission d'ondes acoustiques de volume dans la surface tactile, des moyens de réception des ondes acoustiques de volume après leur propagation dans la surface tactile, conçus pour fournir un signal de réception à partir des ondes acoustiques reçues, et des moyens de détection et de localisation d'un toucher sur la surface tactile à partir du signal de réception. La détection de l'actionnement d'une fonction matérialisée par un trajet prédéterminé sur cette surface tactile revient alors à détecter et localiser plusieurs touchers successifs le long de ce trajet.

Le brevet publié sous le numéro US 6,741,237 décrit un système utilisant la perturbation d'un temps de transit d'ondes acoustiques sismiques se propageant dans un objet, par exemple un écran tactile, entre un transducteur émetteur et au moins deux transducteurs récepteurs disposés autour de l'objet de façon à ce que cette perturbation engendre des fluctuations différentes des temps de transit depuis la zone de perturbation vers les deux transducteurs récepteurs. Ce système est uniquement basé sur des différences de temps de transit et nécessite de disposer les transducteurs en des endroits précis autour de l'objet pour maximiser les différentiels de temps de transit selon au moins deux directions distinctes, par exemple dans les coins pour une plaque rectangulaire d'écran tactile. En outre il permet de détecter une perturbation de type toucher ponctuel, mais pas de la caractériser davantage.

Pour améliorer la sensibilité du système, il est connu de proposer des solutions basées sur une analyse spectrale du signal de réception. L'invention s'applique ainsi plus particulièrement à un système de détection de l'actionnement d'une fonction prédéterminée, cet actionnement étant exécuté par sollicitation tactile d'un trajet prédéterminé associé à cette fonction sur une surface tactile d'un objet, comportant :

- au moins deux sources distinctes d'émission d'ondes acoustiques de volume dans la surface tactile, disposées de manière à engendrer des interférences acoustiques entre les ondes émises,
- au moins un récepteur des ondes acoustiques de volume après leur propagation et leur interférence dans la surface tactile, conçu pour fournir un signal de réception à partir des ondes acoustiques reçues, et
- des moyens de stockage d'une pluralité de signatures spectrales de référence associées au trajet prédéterminé, chacune de ces signatures spectrales étant associée à une localisation d'un toucher sur le trajet prédéterminé.

Par exemple, le brevet publié sous le numéro FR 2 916 545 décrit un système utilisant une reconnaissance de signature d'absorption relative d'une onde acoustique sismique sur un ensemble de figures de résonance de l'interface tactile. L'amortissement et le déphasage relatifs pour chaque fréquence induits par un toucher constituent une des composantes fréquentielles d'un vecteur d'amortissement relatif construit sur un nombre prédéfini de figures de résonance. Grâce à ce système, il est possible de détecter et localiser précisément une interaction sur une surface quelconque à l'aide d'un nombre réduit de transducteurs, selon une cadence de mesures pouvant atteindre cinquante localisations par seconde. La localisation de l'interaction est réalisée par comparaison de la signature d'absorption détectée à des signatures de référence correspondant chacune à la localisation d'un toucher quelque part sur la surface tactile. Les signatures de référence sont obtenues par apprentissage.

La détection de l'actionnement d'une fonction matérialisée par un trajet nécessite donc la détection et la localisation de plusieurs touchers successifs le long de ce trajet, ce qui implique plusieurs comparaisons successives de signatures d'absorptions détectées avec au moins l'ensemble des signatures de référence correspondant chacune à un point du trajet. Lorsque la cadence de mesure est limitée par l'électronique, il est fort probable que tous les points du trajet parcouru ne soient pas détectés si la vitesse de sollicitation tactile du trajet, par exemple à l'aide d'un doigt, est élevée. La vitesse tolérable d'exécution du geste est donc limitée par la performance de l'électronique d'acquisition. En outre, pour compenser les limites de l'électronique d'acquisition, il convient d'augmenter l'échantillonnage spatial du trajet, c'est-à-dire d'augmenter le nombre de signatures de référence apprises pour ce trajet. Cela en fait une technique assez consommatrice en mémoire, car plus le nombre de points appris constituant le trajet est important, meilleure sera la détection de sa sollicitation tactile, mais la taille d'une signature de référence étant proche de 1024x16 bits, il faudra alors un espace mémoire important pour définir un trajet (environ 20 kilo-octets).

Une amélioration de ce système est proposée dans la demande de brevet français publiée sous le numéro FR 2 948 471 dans laquelle ce ne sont plus des figures de résonance mais des figures transitoires de rayonnement, habituellement qualifiées de « figures impulsionnelles de diffraction », qui sont exploitées. Ainsi le procédé de localisation mis en oeuvre n'est pas dépendant des fréquences propres de l'objet et est par ailleurs capable de détecter des touchers multiples. Mais là encore, les mêmes problèmes se posent pour les mêmes raisons lorsqu'il s'agit de détecter la sollicitation dynamique d'un trajet prédéterminé sur la surface tactile.

Il peut ainsi être souhaité de prévoir un système de détection de l'actionnement d'une fonction matérialisée par un trajet prédéterminé sur une surface tactile d'un objet qui permette de s'affranchir d'au moins une partie des problèmes et contraintes précités, en particulier qui soit plus adapté à la détection d'une sollicitation tactile dynamique du trajet.

Il est donc proposé un système de détection de l'actionnement d'une fonction prédéterminée, cet actionnement étant exécuté par sollicitation tactile d'un trajet prédéterminé associé à cette fonction sur une surface tactile d'un objet, comportant :

- au moins deux sources distinctes d'émission d'ondes acoustiques de volume dans la surface tactile, disposées de manière à engendrer des interférences acoustiques entre les ondes émises,
- au moins un récepteur des ondes acoustiques de volume après leur propagation et leur interférence dans la surface tactile, conçu pour fournir un signal de réception à partir des ondes acoustiques reçues,
- des moyens de stockage d'une pluralité de signatures spectrales de référence associées au trajet prédéterminé, chacune de ces signatures spectrales étant associée à une localisation d'un toucher sur le trajet prédéterminé, et
- des moyens de détection de l'actionnement de la fonction prédéterminée par comparaison d'au moins une signature spectrale du signal de réception à une enveloppe spectrale, dite enveloppe spectrale de référence, de la pluralité de signatures spectrales de référence associées au trajet prédéterminé.

Tout en conservant une technologie avantageuse divulguée dans les documents de brevets FR 2 916 545 et FR 2 948 471, il est possible ainsi d'optimiser son application à la détection dynamique d'une sollicitation de trajet (associé à une fonction) en modélisant ce trajet non pas par un ensemble de signatures de référence individualisées, mais par une enveloppe spectrale de ces signatures. Par conséquent, même en multipliant la résolution spatiale des signatures de référence apprises on n'augmente pas la complexité de la détection. Une enveloppe spectrale d'une pluralité de signatures spectrales correspond, en termes de traitement de données, à deux signatures de référence, l'une étant la partie supérieure de l'enveloppe et l'autre sa partie inférieure. Par ailleurs, il a été remarqué que de façon surprenante, en termes de performance et de précision, l'enveloppe spectrale modélisant ainsi un trajet prédéterminé identifie aussi bien ce trajet que l'ensemble des signatures spectrales des points qui le constituent. En fait, les signatures spectrales des points d'un même trajet diffèrent les unes des autres, mais selon des variations finalement suffisamment homogènes pour que l'enveloppe de ces signatures spectrales reste elle-même caractéristique de ce trajet.

De façon optionnelle, les moyens de détection de l'actionnement de la fonction prédéterminée comportent :

- des moyens de calcul d'une enveloppe spectrale de plusieurs signatures spectrales successives du signal de réception,
- des moyens de comparaison de cette enveloppe spectrale calculée à l'enveloppe spectrale de référence.

De façon optionnelle également, les moyens de comparaison sont configurés pour effectuer un test de ressemblance entre l'enveloppe spectrale calculée et l'enveloppe spectrale de référence sur la base du calcul suivant :

$$Cr = \begin{cases} \sum_{f \in F} sat(E^+ - Eref^+) + \sum_{f \in F} sat(E^- - Eref^-) + \\ \sum_{f \in F} sat(Eref^+ - E^+) + \sum_{f \in F} sat(Eref^- - E^-) \end{cases}$$

, où F désigne la bande de fréquences f dans laquelle les enveloppes sont définies, $E^+$ et $E^-$ les parties supérieure et inférieure de l'enveloppe spectrale calculée, $Eref^+$ et $Eref^-$ les parties supérieure et inférieure de l'enveloppe spectrale de référence, et sat() la fonction définie de la façon suivante :

$$\begin{cases} sat(x) = 0 & si \quad x < 0 \\ sat(x) = x & \sin on \end{cases}.$$

De façon optionnelle également, chaque signature spectrale, de référence et du signal de réception, est définie à partir du spectre, du signal de référence et du signal de réception correspondants, calculé dans une bande de fréquences prédéterminée, l'enveloppe spectrale de référence étant calculée dans la même bande de fréquences prédéterminée.

De façon optionnelle également, l'enveloppe spectrale de référence est calculée uniquement à des fréquences de la bande de fréquences prédéterminée pour lesquelles les amplitudes des signatures spectrales associées au trajet prédéterminé sont supérieures à un seuil minimal, notamment un seuil fixé à 1% du pic maximal de ces signatures.

De façon optionnelle également, le trajet prédéterminé est matérialisé sur la surface tactile par une ligne de crête formée à l'aide d'une languette moulée dans le matériau de la surface tactile.

De façon optionnelle également, la languette est formée par une déformation locale d'épaisseur réduite de la surface tactile ou d'épaisseur s'amincissant vers le centre de cette déformation locale.

De façon optionnelle également, le trajet prédéterminé est un segment de droite pour la réalisation d'une fonction de curseur ou de molette linéaire.

De façon optionnelle également, le trajet prédéterminé est un cercle pour la réalisation d'une fonction de molette annulaire.

Il est également proposé un procédé de détection de l'actionnement d'une fonction prédéterminée, cet actionnement étant exécuté par sollicitation tactile d'un trajet prédéterminé associé à cette fonction sur une surface tactile d'un objet, comportant :

- l'émission dans la surface tactile, par au moins deux sources distinctes, d'ondes acoustiques de volume interférant entre elles,
- la réception, par au moins un récepteur, des ondes acoustiques de volume après leur propagation et leur interférence dans la surface tactile, et la fourniture d'un signal de réception à partir des ondes acoustiques reçues,
- l'association d'une pluralité de signatures spectrales de référence au trajet prédéterminé, chacune de ces signatures spectrales étant associée à une localisation d'un toucher sur le trajet prédéterminé,

dans lequel la détection de l'actionnement de la fonction prédéterminée est réalisée par comparaison d'au moins une signature spectrale du signal de réception à une enveloppe spectrale, dite enveloppe spectrale de référence, de la pluralité de signatures spectrales de référence associées au trajet prédéterminé.

L'invention sera mieux comprise à l'aide de la description qui va suivre, donnée uniquement à titre d'exemple et faite en se référant aux dessins annexés dans lesquels :

- la figure 1 représente schématiquement en perspective un système de détection de l'actionnement d'une fonction matérialisée par un trajet prédéterminé sur une surface tactile d'un objet, selon un premier mode de réalisation de l'invention,
- la figure 2 représente schématiquement en vue de face un système de détection de l'actionnement d'une fonction matérialisée par un trajet prédéterminé sur une surface tactile d'un objet, selon un second mode de réalisation de l'invention,
- la figure 3 illustre graphiquement un exemple de signature d'un toucher extraite par un système de détection selon l'invention,
- la figure 4 représente schématiquement une surface tactile fonctionnalisée à l'aide de trajets prédéterminés définis sur cette surface tactile,
- la figure 5 représente en perspective un détail de la surface tactile fonctionnalisée de la figure 4,
- la figure 6 illustre graphiquement un exemple d'enveloppe spectrale de référence associée à l'un des trajets prédéterminés de la surface tactile fonctionnalisée de la figure 4,
- la figure 7 illustre une vue latérale de la surface tactile de la figure 4, connectée à une unité centrale électronique de commande du système de la figure 1 ou 2,
- la figure 8 illustre les étapes successives d'un procédé de détection de l'actionnement d'une fonction matérialisée par un trajet prédéterminé sur une surface tactile d'un objet, selon un mode de réalisation de l'invention.

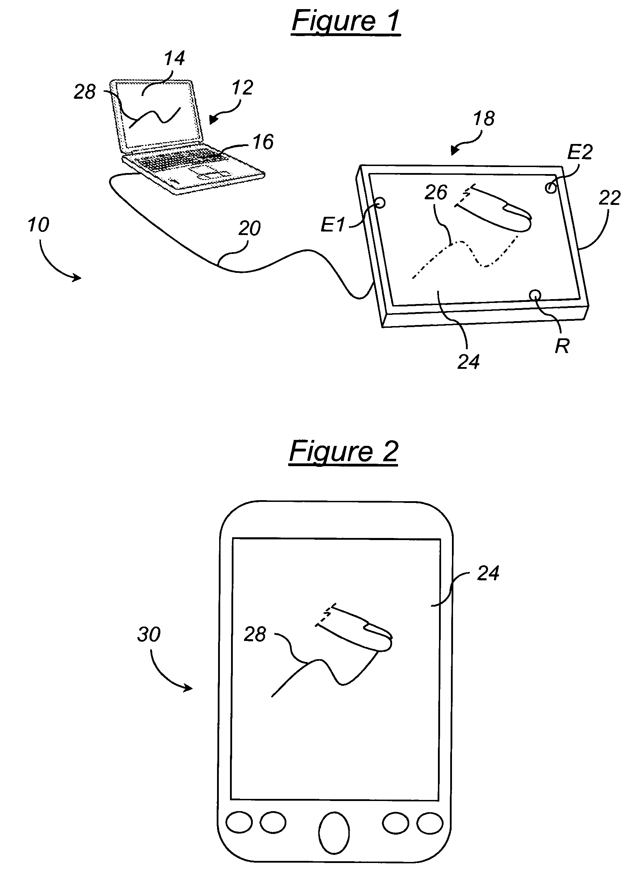

Le système 10 de détection de l'actionnement d'une fonction matérialisée par un trajet prédéterminé sur une surface tactile d'un objet, représenté sur la figure 1, comporte des moyens de traitement de données, par exemple un micro-ordinateur 12 comprenant notamment un écran 14 et un clavier 16, ainsi qu'un objet 18 de type tablette interactive, relié au micro-ordinateur 12 par une liaison 20, filaire ou radio.

La tablette interactive 18 comporte un châssis 22 et une surface tactile 24 maintenue par le châssis sur au moins une partie de ses bords. La surface tactile 24 se présente par exemple sous la forme d'une plaque de métal, de verre ou de plastique, vibrant lorsque des ondes mécaniques élastiques, ou ondes acoustiques de volume, se propagent dans son épaisseur. Elle peut être de forme rectangulaire, notamment au format 4/3. Concrètement, elle peut présenter une longueur de 100 mm, une largeur de 75 mm et une épaisseur relativement faible par rapport à sa longueur et sa largeur, notamment comprise entre 100 $\mu$m et 4 mm, par exemple 450 $\mu$m. Cette épaisseur est également très faible devant la dimension caractéristique d'une zone de la surface tactile 24 susceptible d'être touchée, un doigt d'utilisateur représentant généralement un toucher de diamètre proche du centimètre.

Dans l'exemple illustré sur la figure 1, trois transducteurs piézoélectriques E1, E2 et R sont fixés contre la face intérieure de la plaque tactile 24, c'est-à-dire celle qui est non accessible au toucher et orientée vers l'intérieur du châssis 22. Ils peuvent en particulier être collés sur la plaque 24, au moyen d'une colle époxy conductrice ou cyanoacrylate. Ils peuvent également être noyés dans l'épaisseur du matériau de la plaque tactile lors d'une injection de résine polymère, les transducteurs restant néanmoins très près de la surface, l'une de leurs faces (par exemple la face en laiton dans le cas de transducteurs de type « buzzer » PZT) affleurant de préférence à la surface du matériau de sorte qu'une dilatation radiale de ces transducteurs de faible épaisseur (typiquement d'épaisseur 0,2 mm à 0,5 mm) engendre une flexion de la plaque ou la coque et donc une génération efficace d'un mode de Lamb antisymétrique (ou plus généralement d'un mode de flexion dans un matériau mince isotrope ou anisotrope). Une telle flexion serait moins bien obtenue si les transducteurs était noyés au voisinage de la demi-épaisseur du matériau.

Ces transducteurs piézoélectriques sont par exemple des transducteurs en céramique ferroélectrique de type PZT (Zirconate Titanate de Plomb), dans lesquels la céramique est nue ou laminée sur un disque en laiton. Ils comportent :

- deux transducteurs d'émission E1 et E2 distincts aptes à émettre des ondes mécaniques élastiques (i.e. des ondes acoustiques de volume au sens large) en modes de flexion, comme par exemple des ondes de Lamb antisymétriques, de telle sorte qu'elles se propagent et interfèrent acoustiquement dans la plaque tactile 24,
- un transducteur de réception R apte à capter des ondes mécaniques élastiques, ou ondes acoustiques de volume, après leur propagation en modes de flexion et leur interférence dans la plaque tactile 24.

Ces trois transducteurs sont de préférence disposés en dehors de tout axe de symétrie de la plaque tactile 24. Par ailleurs, ils peuvent être de petite taille et de forme géométrique quelconque. En particulier, pour une plaque tactile 24 aux dimensions précitées (75 mm x 100 mm x 0,45 mm), ils peuvent présenter une surface comprise entre quelques millimètres carrés et un centimètre carré. Si les transducteurs d'émission E1 et E2 sont excités par des signaux de 10 V, le signal de réception fourni par le transducteur de réception R peuvent atteindre 0,2 V sans amplification.

Les transducteurs E1, E2 et R sont reliés à une unité centrale électronique de commande, par exemple intégrée au micro-ordinateur 12 et programmée pour :

- faire propager et interférer dans la plaque tactile 24 des ondes acoustiques de volume à partir des transducteurs piézoélectriques E1 et E2 et faire détecter ces ondes acoustiques par le transducteur piézoélectrique R pour obtenir un signal de réception, et
- localiser au moins un toucher sur la plaque tactile 24 par comparaison de certaines caractéristiques spectrales du signal de réception à un ensemble de caractéristiques spectrales de référence, ces caractéristiques spectrales de référence ayant été apprises lors d'une phase préalable de calibrage de la plaque tactile 24.

Les ondes acoustiques de volume émises dans la plaque tactile 24 à partir des transducteurs piézoélectriques E1 et E2 sont en effet localement absorbées, bloquées ou partiellement réfléchies lorsqu'au moins un doigt ou un stylet est en contact avec la plaque. Cela engendre une perturbation de l'information d'illumination ou de rayonnement fournie au point de réception R. En extrayant certaines caractéristiques spectrales, par exemple des paramètres d'amplitude et/ou de phase spectrales, à des fréquences prédéterminées de cette information d'illumination ou de rayonnement perturbée, il est possible de construire une signature spectrale de la perturbation et de la comparer à des signatures spectrales de référence extraites d'une bibliothèque de signatures spectrales liées à des touchers prédéterminés et d'en déduire une localisation éventuelle d'un toucher. Les procédés mis en oeuvre dans les documents précités FR 2 916 545 et FR 2 948 471 sont applicables. En particulier, les ondes émises par les transducteurs E1 et E2 peuvent prendre la forme de trains d'ondes acoustiques constitués de plusieurs fréquences préétablies, par exemple comprises entre 35 kHz et 96 kHz, pour la formation d'une figure d'illumination ou de rayonnement dans un large spectre.

On obtient ainsi, pour chaque toucher sur la plaque tactile 24, à l'aide d'un doigt ou d'un stylet, une localisation de ce toucher simple ou multiple qui peut par exemple être visualisée sur l'écran du micro-ordinateur 12. Par extension, pour une succession de touchers simples ou multiples détectés sur la plaque tactile 24, formant un tracé simple ou multiple 26, une localisation de ce tracé 26 peut être visualisée sur l'écran du micro-ordinateur 12, sous la forme d'une courbe cinématique 28 obtenue par interpolation du tracé 26 détecté.

Selon un autre mode de réalisation de l'invention illustré sur la figure 2, la plaque tactile 24 peut être transparente et intégrée avec l'unité centrale électronique de commande dans un système électronique embarqué 30, tel qu'un téléphone mobile, un assistant numérique personnel ou tout autre dispositif portable ou embarqué tel qu'une interface homme-machine tactile embarquée dans un véhicule automobile. Dans ce cas, elle peut également de façon optionnelle remplir la fonction d'écran de visualisation de la courbe cinématique 28 obtenue par interpolation du tracé 26 détecté.

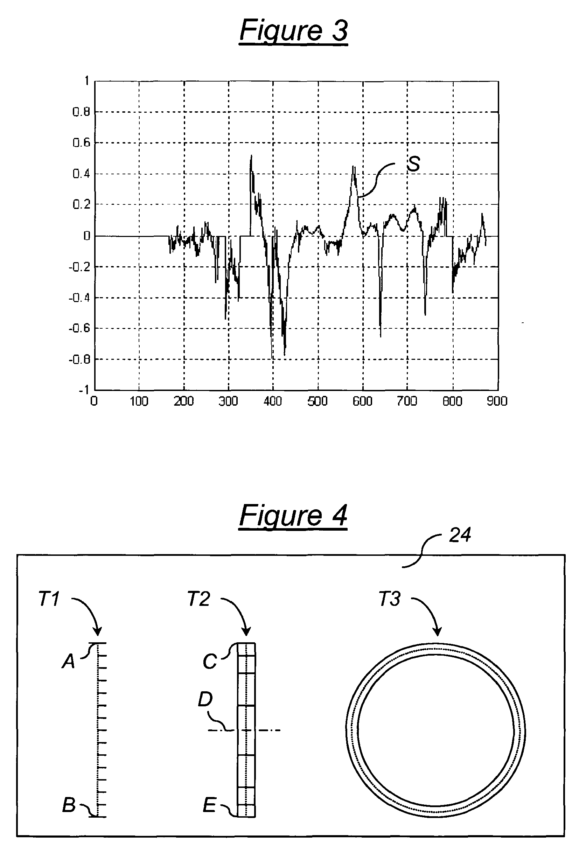

La figure 3 illustre à l'aide d'un diagramme un exemple de signature spectrale S d'un toucher défini par sa localisation ponctuelle sur la plaque tactile 24. La forme générale de cette signature spectrale S est significative de la localisation du toucher sur la plaque tactile 24.

Ainsi, la surface de la plaque tactile 24 peut être échantillonnée spatialement en une pluralité de localisations ponctuelles dont les signatures de référence toutes différentes sont apprises lors d'une phase de calibrage. En outre, comme illustré sur la figure 4, certains trajets prédéterminés et définis chacun en tant qu'ensemble de localisations ponctuelles échantillonnées sur la plaque tactile 24 peuvent être associés à des fonctions prédéterminées ainsi matérialisées sur la plaque tactile 24.

Par exemple, un premier trajet prédéterminé T1 est défini et localisé sur la plaque tactile 24 par un segment de droite figurant un curseur linéaire à plusieurs positions ou degrés prédéfinis. Ce trajet T1 fonctionnalise ainsi localement la plaque tactile en y matérialisant un curseur délimité par deux extrémités A et B. Il peut être considéré comme constitué d'un ensemble rectiligne de localisations ponctuelles échantillonnées de la plaque tactile 24, celles situées sur le segment [A, B] et représentées en pointillés fins.

Par exemple également, un deuxième trajet prédéterminé T2 est défini et localisé sur la plaque tactile 24 par un segment de droite figurant une molette linéaire virtuellement en rotation autour d'un axe D situé dans le plan de la plaque tactile 24. Ce trajet T2 fonctionnalise ainsi également localement la plaque tactile en y matérialisant une molette délimitée par deux extrémités C et E. Il peut lui aussi être considéré comme constitué d'un ensemble rectiligne de localisations ponctuelles échantillonnées de la plaque tactile 24, celles situées sur le segment [C, E] et représentées en pointillés fins.

Par exemple également, un troisième trajet prédéterminé T3 est défini et localisé sur la plaque tactile 24 par un cercle figurant une molette annulaire virtuellement en rotation autour d'un axe orthogonal au plan de la plaque tactile 24. Ce trajet T3 fonctionnalise ainsi également localement la plaque tactile en y matérialisant une molette annulaire. Il peut lui aussi être considéré comme constitué d'un ensemble circulaire de localisations ponctuelles échantillonnées de la plaque tactile 24, celles situées sur le cercle représenté en pointillés fins dans la molette annulaire.

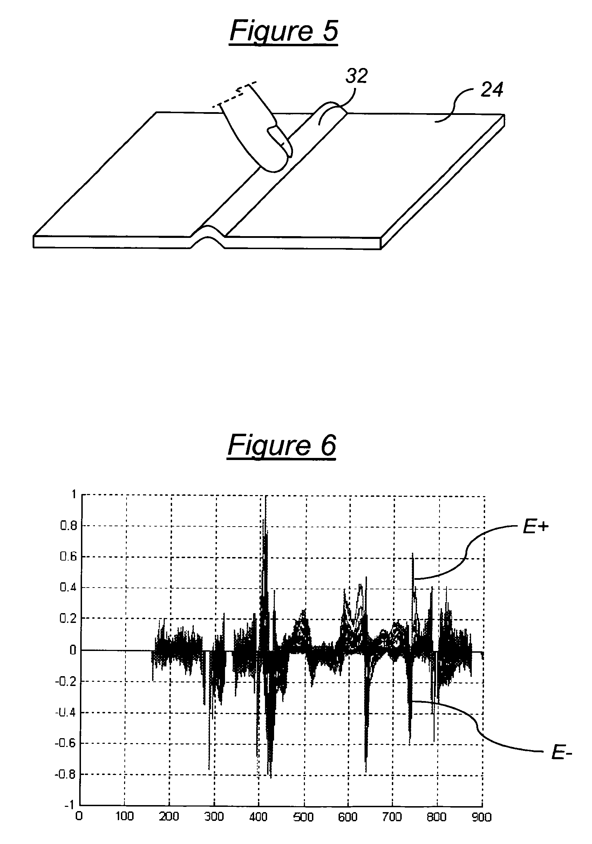

Comme illustré sur la figure 5 en perspective, chacun de ces trajets T1, T2 et T3 peut être matérialisé sur la plaque tactile 24 par une ligne de crête formée à l'aide d'une languette 32, droite ou circulaire, moulée dans le matériau de la surface tactile 24. Dans un mode de réalisation simple à réaliser et ergonomique au toucher, cette languette 32 est formée par une déformation locale convexe d'épaisseur réduite (en pratique inférieure à 2 mm pour un matériau plastique) de la plaque tactile 24 ou d'épaisseur s'amincissant vers la crête de la surface convexe. Elle peut éventuellement être plus ou moins aplanie, mais son étendue latérale reste inférieure à la largeur d'un doigt de façon à pouvoir le guider et concentrer la pression sur une petite partie de la pulpe du doigt, ce qui a pour effet de normaliser la surface de contact avec le doigt, que celui-ci soit grand (celui d'un adulte) ou petit (celui d'en enfant), d'améliorer la reproductibilité des signatures spectrales de référence et donc de faciliter la reconnaissance des touchers. En variante, la déformation locale pourrait être concave. Par ailleurs, en dehors des zones fonctionnalisées, la plaque tactile 24 peut avantageusement être beaucoup plus épaisse ce qui réduira d'autant la perturbation relative du spectre de réception de façon à permettre par exemple à la paume d'une main de prendre appui sur une zone non fonctionnalisée de la surface sans pour autant déclencher une tentative de localisation par le système, celui-ci considérant alors la perturbation détectée comme un simple signal parasite nécessitant une redéfinition du signal de mesure à vide (i.e. sans contact. On pourrait dire « tarage » par analogie avec une mesure du poids d'un récipient avant de le remplir).

En variante ou en complément, les trajets T1, T2 et T3 peuvent être matérialisés graphiquement à l'aide d'un écran graphique sous-jacent.

Si l'on superpose les signatures spectrales de référence de tous les points constituant l'un quelconque des trajets T1, T2 ou T3 de la figure 4, on obtient un diagramme tel que celui de la figure 6, dans lequel on peut observer une variation légère et homogène des signatures spectrales entre elles. En ne retenant que les valeurs supérieures et inférieures de toutes ces signatures spectrales, on définit leur enveloppe spectrale E qui peut alors, en fait elle-même, être considérée comme constituée de deux signatures spectrales : l'une notée E+ et qualifiée de partie supérieure de l'enveloppe, reprenant toutes les valeurs supérieures précitées, l'autre notée E- et qualifiée de partie inférieure de l'enveloppe, reprenant toutes les valeurs inférieures précitées. Cette enveloppe spectrale constitue une référence pour le trajet T1, T2 ou T3 considéré. Elle le caractérise de façon unique.

En termes mathématiques, si l'on note F la bande spectrale d'intérêt dans laquelle sont définies toutes les signatures spectrales de référence, l'expression de l'enveloppe spectrale de référence prend la forme suivante : $\forall f \in$

$$F, \begin{cases} E+(f) = \underset{i}{Max}\ S_i(f) \\ E-(f) = \underset{i}{Min}\ S_i(f) \end{cases}$$, où $S_i$ désigne les signatures spectrales de référence associées au trajet considéré.

En variante, on peut aussi ne calculer l'enveloppe spectrale que pour certaines fréquences de la bande spectrale F, par exemple en excluant les composantes spectrales d'amplitudes trop faibles (par exemple inférieures à 1% du pic maximal), leur variabilité pouvant être jugée trop instable vis-à-vis d'autres perturbations telles que les variations de température ou d'encastrement de la plaque tactile 24 dans l'objet.

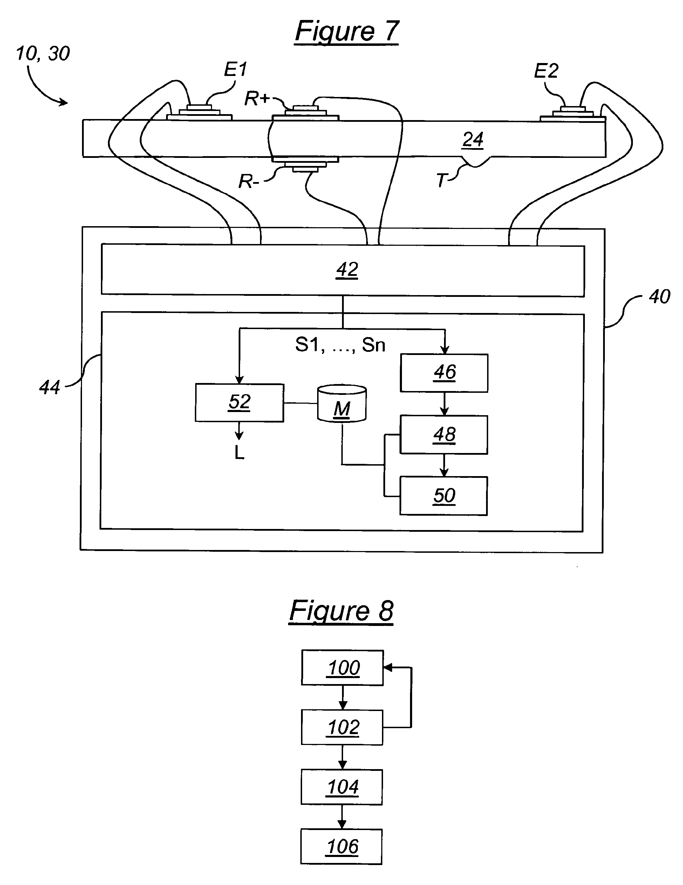

La plaque tactile 24 est représentée en vue latérale sur la figure 7. Elle est raccordée à une unité centrale électronique de commande 40 comportant :

- un microcontrôleur 42 d'émission/réception des ondes acoustiques de volume, plus précisément raccordé électriquement aux transducteurs piézoélectriques E1, E2 et R, et

- un module de traitement 44 programmé pour traiter numériquement les signaux de réception fournis par le microcontrôleur d'émission/réception 42 de manière à détecter et localiser des touchers simples ou multiples sur la plaque tactile 24 et à détecter l'actionnement d'une fonction matérialisée par un trajet T prédéterminé sur la surface de contact de la plaque tactile 24.

Le microcontrôleur d'émission/réception 42 est doté d'une unité arithmétique et logique, éventuellement pilotée par le micro-ordinateur 12 dans le cas du dispositif 10. Il comporte une sortie numérique reliée à un étage de puissance à pont complet (« full bridge » en anglais) relié aux transducteurs d'émission E1 et E2, ou bien faisant intervenir d'abord un étage de modulation par largeur d'impulsion (PWM = « Pulse Width Modulation » en anglais) suivi d'un filtrage passe-bas avant amplification et excitation des transducteurs E1 et E2. Enfin, le microcontrôleur peut également émettre un signal de sortie sous la forme d'une amplitude codée sous 8 ou 16 bits, reliée via un convertisseur numérique/analogique dont la sortie est éventuellement amplifiée et reliée aux transducteurs d'émission E1 et E2. Par ailleurs, le transducteur de réception R est relié à un convertisseur analogique/numérique lui-même relié au ou partie intégrante du microcontrôleur d'émission/réception 42. Ce convertisseur analogique/numérique et le microcontrôleur d'émission/réception 42 sont aptes à effectuer un échantillonnage des signaux captés sur au moins 8 bits, préférentiellement sur 10 bits, voire sur 12 ou 16 bits ou plus à une cadence d'au moins 192 kHz et préférentiellement de 350 kHz.

Selon une variante de réalisation, ou plus particulièrement dans le cas d'un banc de test, les convertisseurs analogique/numérique et numérique/analogique peuvent être remplacés par une carte d'acquisition et un générateur de fonctions arbitraires.

Les liaisons électriques vers les transducteurs E1, E2 et R peuvent être constituées notamment de câbles coaxiaux de type audio ou de toute autre liaison blindée. Cette condition est plus forte pour le transducteur de réception R dont on regarde les petites perturbations que pour les deux transducteurs d'émission E1 et E2 qui peuvent être câblés via des paires torsadées.

Dans l'exemple illustré sur la figure 7, il convient de noter par ailleurs que le transducteur de réception R est en fait constitué de deux transducteurs R+ et R-disposés en vis-à-vis de part et d'autre de la plaque tactile 24. Ce montage en réception n'est pas indispensable mais est avantageusement mis en oeuvre pour permettre une réception sélective des ondes acoustiques de volume après leurs propagation et interférences dans la plaque tactile 24. En particulier, il vise à extraire un signal de réception $R(t)$ qui ne dépendent essentiellement que du mode fondamental antisymétrique $A_0$ de propagation des ondes de Lamb. D'une façon générale, les fréquences utilisées en émission ne dépassant pas les 100 kHz, les ondes acoustiques de volume se propagent dans une plaque mince sous la forme d'ondes Lamb suivant trois modes : le mode symétrique (S), le mode antisymétrique (A) et le mode transverse horizontale (TH), chacun de ces modes étant caractérisé par une déformation particulière de la plaque ou la coque mince et une courbe de dispersion propre. Sachant que c'est essentiellement le mode fondamental antisymétrique Ao (ou de flexion pour les solides non isotropes non homogènes) qui réagit à un toucher simple ou multiple sur la plaque tactile 24, il est avantageux de filtrer (c'est-à-dire rejeter ou discriminer) les autres modes pour éviter des distorsions inutiles.

La réception sélective du mode fondamental antisymétrique Ao de propagation des ondes de Lamb à l'aide des deux transducteurs R+ et R- disposés en vis-à-vis peut s'envisager concrètement de différentes façons :

- les deux transducteurs R+ et R- sont disposés de manière à présenter des polarisations orientées antisymétriquement par rapport au plan médian de la plaque tactile 24 et sont connectés électriquement en parallèle entre eux,
- les deux transducteurs R+ et R- sont disposés de manière à présenter des polarisations orientées symétriquement par rapport au plan médian de la plaque tactile 24 et sont connectés électriquement en antiparallèle entre eux,
- les deux transducteurs R+ et R- sont disposés de manière à présenter des polarisations orientées symétriquement par rapport au plan médian de la plaque tactile 24 et sont connectés électriquement en série entre eux (montage illustré sur la figure 7, nécessitant moins de câbles de connexion que les deux précédents et simple à réaliser lorsque les transducteurs PZT peuvent être connectés par leurs disques en laiton).

Ces trois types de montage ne sont efficaces que si la plaque tactile est d'épaisseur relativement homogène et isotrope.

En variante ou en complément de la réception sélective du mode fondamental antisymétrique Ao de propagation des ondes de Lamb à l'aide des deux transducteurs R+ et R- disposés en vis-à-vis, il pourrait être également envisagé une émission sélective de ce mode fondamental antisymétrique à l'aide de paires de transducteurs d'émission (E1+ et E1-, E2+ et E2-) disposées en vis-à-vis. Mais en pratique, cette variante ou ce complément n'est pas très avantageux puisque cela induit une forte augmentation de la capacité statique des transducteurs émetteurs et donc de la consommation en courant électrique.

Le signal de réception $R(t)$, mesuré à une cadence de vingt acquisitions par seconde, est numérisé par le microcontrôleur d'émission/réception 42. Lorsque la plaque tactile 24 est sollicitée tactilement pendant une certaine durée, n signaux numériques successifs R1, ..., Rn sont ainsi acquis. Ces signaux peuvent être transformés par FFT (de l'anglais « Fast Fourier Transform »), comparés à un spectre à vide de référence et transformés en signatures spectrales S1, ..., Sn conformément à l'enseignement des documents de brevets FR 2 916 545 et FR 2 948 471 avant d'être transmis au module de traitement 44. Ce sont alors ces signatures spectrales successives S1, ..., Sn qui sont reçues et traitées par le module 44.

Le module de traitement 44 comporte un module 46 de calcul d'une enveloppe spectrale (E+, E-) des signatures spectrales S1, ..., Sn. Ce calcul est par exemple le même que celui indiqué précédemment pour l'enveloppe de référence associée à un trajet prédéterminé.

Le module de traitement 44 comporte en outre un module 48 de caractérisation de la sollicitation R1, ..., Rn par comparaison de l'enveloppe spectrale (E+, E-) calculée par le module 46 à une enveloppe spectrale de référence (Eref+, Eref-) associée au trajet T, stockée dans une zone de mémoire M à laquelle le module de caractérisation 48 a accès en lecture.

Cette comparaison est un test de ressemblance entre l'enveloppe spectrale calculée (E+, E-) et l'enveloppe spectrale de référence (Eref+, Eref-). Elle peut prendre plusieurs formes. L'une d'entre elles peut consister à calculer une fonction de coût représentant ce qui dépasse de l'aire commune aux deux enveloppes, par exemple selon la formulation suivante :

$$Cr = \sum_{f \in F} sat\left(E^+ - Eref^+\right) + \sum_{f \in F} sat\left(E^- - Eref^-\right) + \sum_{f \in F} sat\left(Eref^+ - E^+\right) + \sum_{f \in F} sat\left(Eref^- - E^-\right)$$

avec :

$$\begin{cases} sat(x) = 0 & si \quad x < 0 \\ sat(x) = x & \sin on \end{cases}.$$

Ainsi, la sollicitation détectée R1, ..., Rn peut être considérée comme un actionnement de la fonction associée au trajet T si la fonction coût reste inférieure à un certain seuil à définir.

On notera que lorsque la plaque tactile 24 comporte plusieurs fonctions différentes matérialisées par plusieurs trajets prédéterminés comme sur l'exemple de la figure 4, il peut être calculé un indice de confiance IC associé à chaque fonction pour le test de ressemblance effectué sur l'enveloppe spectrale calculée (E+, E-), par exemple exprimé en pourcentages (pouvant être positifs ou négatifs) selon la formule suivante :

$$IC(j) = 100\left(1 - \frac{Cr(j)}{\langle Cr \rangle}\right),$$

où *Cr(j)* est la fonction de coût calculée entre l'enveloppe spectrale (E+, E-) et l'enveloppe spectrale de référence associée à la fonction j et où *<Cr>* est la valeur moyenne des fonctions de coût calculées entre l'enveloppe spectrale (E+,E-) et les enveloppes spectrales de référence de toutes les fonctions. On sélectionne alors la fonction rendant le meilleur indice IC et dépassant un seuil de reconnaissance à déterminer selon l'application.

Le module de traitement 44 comporte en outre un module 50 d'interprétation de la sollicitation R1, ..., Rn lorsqu'elle a été caractérisée comme étant un actionnement de la fonction associée au trajet T. Cette interprétation inclut notamment par exemple une estimation d'un sens, d'une amplitude et d'une vitesse de déplacement de la sollicitation tactile. Cela peut se faire par des calculs simples en considérant l'ordre d'apparition des signatures spectrales S1, ..., Sn et les instants auxquelles elles apparaissent. Par exemple, en se concentrant sur une fréquence d'intérêt particulière de ces signatures spectrales successives on peut recueillir une nouvelle signature temporelle caractéristique d'un déplacement à comparer de façon connue en soi à une base de caractéristiques temporelles de référence enregistrées dans la zone de mémoire M. Ces caractéristiques de référence peuvent être associées à des positionnements ou défilements dans des menus définis par la fonction de curseur ou molette matérialisée sur la plaque tactile 24, ce qui permet une interprétation précise de la sollicitation tactile détectée : choix d'un article dans une liste d'articles (fonction curseur ou molette linéaire), balayage plus ou moins rapide d'articles dans une liste (fonction molette linéaire ou annulaire), etc.

Enfin, parallèlement aux modules 46, 48 et 50 mentionnés précédemment, le module de traitement 44 comporte un module 52 de localisation L de chaque toucher sur la plaque tactile 24 par comparaison de chaque signature S1, ..., Sn à un ensemble de signatures de références stockées dans la zone de mémoire M. Le fonctionnement de ce module est connu au vu des documents de brevets FR 2 916 545 et FR 2 948 471, il ne sera donc pas détaillé. Parmi les signatures de référence, celles qui sont sur le trajet T sont justement celles qui ont participé au calcul de l'enveloppe spectrale de référence associée au trajet T. Les deux détections, l'une dynamique réalisée par comparaison de l'enveloppe spectrale de la succession de signatures S1, ..., Sn à une enveloppe spectrale de référence, l'autre statique réalisée par comparaison de chaque signature S1, ..., Sn à un ensemble de signatures de référence couvrant la surface de la plaque tactile 24, sont complémentaires et se combinent avantageusement. D'ailleurs, les résultats (localisations successives) de la détection statique peuvent être exploités par le module d'interprétation 50, en variante ou en complément de ce qui a déjà été décrit, pour estimer le sens, l'amplitude et la vitesse du mouvement détecté.

Un procédé de détection de l'actionnement d'une fonction prédéterminée, cet actionnement étant exécuté par sollicitation tactile d'un trajet prédéterminé associé à cette fonction sur une surface tactile d'un objet, mis en oeuvre par le système 10 ou 30 précédemment décrit va maintenant être détaillé en référence à la figure 8.

Au cours d'une étape 100, des ondes acoustiques de volume sont émises dans la plaque tactile 24 par les transducteurs d'émission E1 et E2 sur commande du microcontrôleur d'émission/réception 42.

Au cours d'une étape 102, les ondes acoustiques émises sont reçues par le transducteur de réception R après s'être propagées dans la plaque tactile 24 et avoir interféré entre elles. Le microcontrôleur d'émission/réception 42 traite le signal analogique renvoyé par le transducteur R pour fournir un signal de réception numérisé, transformé par FFT, puis transformé par calcul en une signature spectrale.

Les étapes 100 et 102 sont répétées en boucles.

Au cours d'une étape 104 exécutée suite à l'une des instances de l'étape répétée 102, une sollicitation tactile de la plaque tactile 24 est détectée. Cette détection peut résulter d'une variation brusque de certaines caractéristiques du signal de réception ou de son spectre (atténuation, distorsion du spectre par rapport à un spectre de référence à vide, ...). La sollicitation est détectée pendant une durée permettant l'acquisition d'une succession de signatures spectrales S1, ..., Sn et le calcul, par le module 46, de leur enveloppe spectrale.

Enfin, au cours d'une étape de détection 106 exécutée par les modules 48 et 50, l'enveloppe spectrale calculée est comparée à l'enveloppe spectrale de référence associée au trajet T considéré (T1, T2 ou T3) pour déterminer si la sollicitation tactile détectée est bien relative à un actionnement de la fonction matérialisée par le trajet T, puis analysée le cas échéant pour interpréter plus finement la nature de la sollicitation (sens, amplitude et vitesse du déplacement détecté).

Il apparaît clairement qu'un système de détection de l'actionnement d'une fonction matérialisée par un trajet prédéterminé sur une surface tactile d'un objet tel que celui décrit précédemment constitue un perfectionnement de la technologie enseignée dans les documents de brevets FR 2 916 545 et FR 2 948 471 à une application de détection dynamique, dont un effet majeur est un gain très sensible de mémoire et de temps de calcul. En comparant les enveloppes des signatures spectrales acquises et apprises, la complexité des calculs est en outre quasiment indépendante de la cadence à laquelle le système est capable de réaliser ses acquisitions. Par ailleurs, il se trouve que la fiabilité de la détection est également améliorée, les enveloppes spectrales s'avérant très discriminantes d'un trajet à l'autre sur la plaque tactile 24. La détection reste fiable même lorsque le déplacement de la sollicitation tactile est rapide ce qui témoigne de la robustesse du principe mis en oeuvre par l'invention.

On notera par ailleurs que l'invention n'est pas limitée aux modes de réalisation décrits précédemment.

En particulier, la plaque tactile 24 illustrée et détaillée en référence aux deux exemples des figures 1 et 2 peut être remplacée par toute coque tactile de forme quelconque, y compris tridimensionnelle.

Il apparaîtra plus généralement à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Système (10, 30) de détection de l'actionnement d'une fonction prédéterminée, cet actionnement étant exécuté par sollicitation tactile d'un trajet prédéterminé (T ; T1, T2, T3) associé à cette fonction sur une surface tactile (24) d'un objet, comportant :

   - au moins deux sources distinctes (E1, E2) d'émission d'ondes acoustiques de volume dans la surface tactile (24), disposées de manière à engendrer des interférences acoustiques entre les ondes émises,
   - au moins un récepteur (R ; R+, R-) des ondes acoustiques de volume après leur propagation et leur interférence dans la surface tactile (24), conçu pour fournir un signal de réception à partir des ondes acoustiques reçues,

- des moyens (M) de stockage d'une pluralité de signatures spectrales de référence associées au trajet prédéterminé (T ; T1, T2, T3), chacune de ces signatures spectrales étant associée à une localisation d'un toucher sur le trajet prédéterminé,

**caractérisé en ce qu'**il comporte des moyens (46, 48, 50) de détection de l'actionnement de la fonction prédéterminée par comparaison d'au moins une signature spectrale (S1, ..., Sn) du signal de réception à une enveloppe spectrale, dite enveloppe spectrale de référence, de la pluralité de signatures spectrales de référence associées au trajet prédéterminé (T ; T1, T2, T3), cette enveloppe spectrale de référence correspondant à deux signatures spectrales, l'une étant la partie supérieure de l'enveloppe et l'autre sa partie inférieure.

2. Système (10, 30) de détection de l'actionnement d'une fonction selon la revendication 1, dans lequel les moyens (46, 48, 50) de détection de l'actionnement de la fonction prédéterminée comportent :

   - des moyens (46) de calcul d'une enveloppe spectrale (E+, E-) de plusieurs signatures spectrales (S1, ..., Sn) successives du signal de réception,
   - des moyens (48) de comparaison de cette enveloppe spectrale calculée (E+, E-) à l'enveloppe spectrale de référence.

3. Système (10, 30) de détection de l'actionnement d'une fonction selon la revendication 2, dans lequel les moyens (48) de comparaison sont configurés pour effectuer un test de ressemblance entre l'enveloppe spectrale calculée (E+, E-) et l'enveloppe spectrale de référence sur la base du calcul suivant :

$$Cr = \begin{cases} \sum_{f \in F} sat\left(E^+ - Eref^+\right) + \sum_{f \in F} sat\left(E^- - Eref^-\right) + \\ \sum_{f \in F} sat\left(Eref^+ - E^+\right) + \sum_{f \in F} sat\left(Eref^- - E^-\right) \end{cases}$$ , où F désigne la bande de fréquences f dans laquelle les enveloppes sont définies, $E^+$ et $E^-$ les parties supérieure et inférieure de l'enveloppe spectrale calculée, $Eref^+$ et $Eref^-$ les parties supérieure et inférieure de l'enveloppe spectrale de référence, et sat() la fonction définie de la façon suivante :

$$\begin{cases} sat(x) = 0 & si \quad x < 0 \\ sat(x) = x & \sin on \end{cases} .$$

4. Système (10, 30) de détection de l'actionnement d'une fonction selon l'une quelconque des revendications 1 à 3, dans lequel chaque signature spectrale, de référence et du signal de réception (S1, ..., Sn), est définie à partir du spectre, du signal de référence et du signal de réception correspondants, calculé dans une bande de fréquences prédéterminée, l'enveloppe spectrale de référence étant calculée dans la même bande de fréquences prédéterminée.

5. Système (10, 30) de détection de l'actionnement d'une fonction selon la revendication 4, dans lequel l'enveloppe spectrale de référence est calculée uniquement à des fréquences de la bande de fréquences prédéterminée pour lesquelles les amplitudes des signatures spectrales associées au trajet prédéterminé sont supérieures à un seuil minimal, notamment un seuil fixé à 1% du pic maximal de ces signatures.

6. Système (10, 30) de détection de l'actionnement d'une fonction selon l'une quelconque des revendications 1 à 5, dans lequel le trajet prédéterminé (T ; T1, T2, T3) est matérialisé sur la surface tactile (24) par une ligne de crête formée à l'aide d'une languette (32) moulée dans le matériau de la surface tactile.

7. Système (10, 30) de détection de l'actionnement d'une fonction selon la revendication 6, dans lequel la languette (32) est formée par une déformation locale d'épaisseur réduite de la surface tactile (24) ou d'épaisseur s'amincissant vers le centre de cette déformation locale.

8. Système (10, 30) de détection de l'actionnement d'une fonction selon l'une quelconque des revendications 1 à 7, dans lequel le trajet prédéterminé (T1, T2) est un segment de droite pour la réalisation d'une fonction de curseur (T1) ou de molette linéaire (T2).

9. Système (10, 30) de détection de l'actionnement d'une fonction selon l'une quelconque des revendications 1 à 7, dans lequel le trajet prédéterminé (T3) est un cercle pour la réalisation d'une fonction de molette annulaire.

10. Procédé de détection de l'actionnement d'une fonction prédéterminée, cet actionnement étant exécuté par sollicitation tactile d'un trajet prédéterminé (T) associé à cette fonction sur une surface tactile (24) d'un objet, comportant :

- l'émission (100) dans la surface tactile (24), par au moins deux sources distinctes (E1, E2), d'ondes acoustiques de volume interférant entre elles,
- la réception (102), par au moins un récepteur (R ; R+, R-), des ondes acoustiques de volume après leur propagation et leur interférence dans la surface tactile (24), et la fourniture d'un signal de réception à partir des ondes acoustiques reçues,
- l'association d'une pluralité de signatures spectrales de référence au trajet prédéterminé (T), chacune de ces signatures spectrales étant associée à une localisation d'un toucher sur le trajet prédéterminé,

**caractérisé en ce que** la détection (106) de l'actionnement de la fonction prédéterminée est réalisée par comparaison d'au moins une signature spectrale du signal de réception à une enveloppe spectrale, dite enveloppe spectrale de référence, de la pluralité de signatures spectrales de référence associées au trajet prédéterminé (T), cette enveloppe spectrale de référence correspondant à deux signatures spectrales, l'une étant la partie supérieure de l'enveloppe et l'autre sa partie inférieure.

**Patentansprüche**

1. System (10, 30) zum Nachweis der Betätigung einer vorbestimmten Funktion, wobei diese Betätigung durch berührungsempfindliche Beanspruchung eines vorbestimmten Pfads (T; T1, T2, T3) durchgeführt wird, der mit dieser Funktion auf einer berührungsempfindlichen Oberfläche (24) eines Objekts assoziiert ist, umfassend:

- mindestens zwei verschiedene Quellen (E1, E2) zur Emission von akustischen Volumenwellen in der berührungsempfindlichen Oberfläche (24), die angeordnet sind, um akustische Interferenzen zwischen den emittierten Wellen zu erzeugen,
- mindestens einen Empfänger (R; R+, R-) der akustischen Volumenwellen nach ihrer Ausbreitung und ihrer Interferenz in der berührungsempfindlichen Oberfläche (24), entworfen, um ein Empfangssignal auf der Grundlage von empfangenen akustischen Wellen zu liefern,
- Mittel (M) zum Speichern einer Vielzahl von spektralen Referenzsignaturen, die mit dem vorbestimmten Pfad (T; T1, T2, T3) assoziiert sind, wobei jede dieser spektralen Signaturen mit einer Position einer Berührung auf dem vorbestimmten Pfad assoziiert ist,

**dadurch gekennzeichnet, dass** es Mittel (46, 48, 50) zum Nachweis der Betätigung der vorbestimmten Funktion durch Vergleich von mindestens einer spektralen Signatur (S1, ..., Sn) des Empfangssignals mit einer spektralen Hülle, genannt spektrale Referenzhülle, der Vielzahl von spektralen Referenzsignaturen umfasst, die mit dem vorbestimmten Pfad (T; T1, T2, T3) assoziiert sind, wobei diese spektrale Referenzhülle zwei spektralen Signaturen entspricht, wobei eine der obere Teil der Hülle und die andere ihr unterer Teil ist.

2. System (10, 30) zum Nachweis der Betätigung einer Funktion nach Anspruch 1, wobei die Mittel (46, 48, 50) zum Nachweis der Betätigung der vorbestimmten Funktion Folgendes umfassen:

- Mittel (46) zum Berechnen einer spektralen Hülle (E+, E-) von mehreren aufeinander folgenden spektralen Signaturen (S1, ..., Sn) des Empfangssignals,
- Mittel (48) zum Vergleich dieser berechneten spektralen Hülle (E+, E-) mit der spektralen Referenzhülle.

3. System (10, 30) zum Nachweis der Betätigung einer Funktion nach Anspruch 2, wobei die Mittel (48) zum Vergleich konfiguriert sind, um eine Ähnlichkeitsprüfung zwischen der berechneten spektralen Hülle ($E^+$, $E^-$) und der spektralen Referenzhülle auf der Grundlage der folgenden Berechnung durchzuführen:

$$Cr = \begin{cases} \sum_{f\in F} sat\left(E^+ - Eref^+\right) + \sum_{f\in F} sat\left(E^- - Eref^-\right) + \\ \sum_{f\in F} sat\left(Eref^+ - E^+\right) + \sum_{f\in F} sat\left(Eref^- - E^-\right) \end{cases}$$ , wobei F das band der Frenquenzen f bezeichnet, in dem die Hüllen definiert sind, $E^+$ und $E^-$ den oberen und unteren Teil der berechneten spektralen Hülle, $Eref^+$ und $Eref^-$ den oberen und unteren Teil der berechneten spektralen Referenzhülle und sat() die Funktion, die wie folgt definiert ist:

$$\begin{cases} sat(x) = 0 \quad wenn \quad x < 0 \\ sat(x) = x \quad sonst \end{cases} .$$

4. System (10, 30) zum Nachweis der Betätigung einer Funktion nach einem der Ansprüche 1 bis 3, wobei jede spektrale Signatur, der Referenz und des Empfangssignals (S1, ..., Sn), auf der Grundlage des Spektrums, des entsprechenden Referenzsignals und Empfangssignals, berechnet in einem vorbestimmten Frequenzband, definiert ist, wobei die spektrale Referenzhülle im gleichen vorbestimmten Frequenzband berechnet ist.

5. System (10, 30) zum Nachweis der Betätigung einer Funktion nach Anspruch 4, wobei die spektrale Referenzhülle ausschließlich aus Frequenzen des vorbestimmten Frequenzbands berechnet ist, für die die Amplituden der spektralen Signaturen, die mit dem vorbestimmten Pfad assoziiert sind, größer als ein minimaler Schwellwert sind, insbesondere ein Schwellwert, der bei 1 % der maximalen Spitze dieser Signaturen festgelegt ist.

6. System (10, 30) zum Nachweis der Betätigung einer Funktion nach einem der Ansprüche 1 bis 5, wobei der vorbestimmte Pfad (T; T1, T2, T3) auf der berührungsempfindlichen Oberfläche (24) die Form einer Hochlinie aufweist, die mit Hilfe einer Lasche (32) gebildet ist, die im Material der berührungsempfindlichen Oberfläche geformt ist.

7. System (10, 30) zum Nachweis der Betätigung einer Funktion nach Anspruch 6, wobei die Lasche (32) durch eine lokale Verformung mit reduzierter Dicke der berührungsempfindlichen Oberfläche (24) oder einer sich hin zum Zentrum dieser lokalen Verformung verringernden Dicke gebildet ist.

8. System (10, 30) zum Nachweis der Betätigung einer Funktion nach einem der Ansprüche 1 bis 7, wobei der vorbestimmte Pfad (T1, T2) ein Liniensegment für die Durchführung einer Funktion eines Cursors (T1) oder eines linearen Rändels (T2) ist.

9. System (10, 30) zum Nachweis der Betätigung einer Funktion nach einem der Ansprüche 1 bis 7, wobei der vorbestimmte Pfad (T3) ein Kreis für die Durchführung einer Funktion eines kreisförmigen Rändels ist.

10. Verfahren zum Nachweis der Betätigung einer vorbestimmten Funktion, wobei diese Betätigung durch berührungsempfindliche Beanspruchung eines vorbestimmten Pfads (T) durchgeführt wird, der mit dieser Funktion auf einer berührungsempfindlichen Oberfläche (24) eines Objekts assoziiert ist, umfassend:

   - die Emission (100) auf der berührungsempfindlichen Oberfläche (24) durch mindestens zwei verschiedenen Quellen (E1, E2) von akustischen Volumenwellen, die untereinander interferieren,
   - den Empfang (102) durch mindestens einen Empfänger (R; R+, R-), der akustischen Volumenwellen nach ihrer Ausbreitung und ihrer Interferenz in der berührungsempfindlichen Oberfläche (24), und die Lieferung eines Empfangssignals auf der Grundlage der empfangenen akustischen Wellen,
   - die Assoziierung einer Vielzahl von spektralen Referenzsignaturen mit dem vorbestimmten Pfad (T), wobei jede dieser spektralen Signaturen mit einer Position einer Lokalisierung einer Berührung auf dem vorbestimmten Pfad assoziiert ist,

   **dadurch gekennzeichnet, dass** der Nachweis (106) der Betätigung der vorbestimmten Funktion durch den Vergleich von mindestens einer spektralen Signatur des Empfangssignals mit einer spektralen Hülle, genannt spektrale Referenzhülle, der Vielzahl von spektralen Referenzsignaturen durchgeführt wird, die mit dem vorbestimmten Pfad (T) assoziiert sind, wobei diese spektrale Referenzhülle zwei spektralen Signaturen entspricht, wobei eine der obere Teil der Hülle und die andere ihr unterer Teil ist.

**Claims**

1. System (10, 30) for detecting the actuation of a pre-determined function, this actuation being executed by means of touch contact with a pre-determined path (T; T1, T2, T3) associated with this function on a touch-sensitive surface (24) of an object, comprising:

   - at least two separate sources (E1, E2) for transmitting bulk acoustic waves in the touch-sensitive surface (24), arranged so as to generate acoustic interference between the transmitted waves,
   - at least one bulk acoustic wave receiver (R; R+, R-) after the propagation and interference thereof in the touch-sensitive surface (24), designed to supply a reception signal on the basis of the acoustic waves received,
   - means (M) for storing a plurality of reference spectral signatures associated with the pre-determined path (T; T1, T2, T3), each of these spectral signatures being associated with a localization of a touch on the pre-determined path,

   **characterized in that** it comprises means (46, 48, 50) for detecting the actuation of the pre-determined function by comparing at least one spectral signature (S1, ..., Sn) of the reception signal to a spectral envelope, or reference spectral envelope, of the plurality of reference spectral signatures associated with the pre-determined path (T; T1, T2, T3), this spectral envelope corresponding to two spectral signatures, one being the upper part of the envelope and the other the lower part thereof.

2. System (10, 30) for detecting the actuation of a function according to claim 1, wherein the means (46, 48, 50) for detecting the actuation of the pre-determined function comprise:

   - means (46) for computing a spectral envelope (E+, E-) of a plurality of successive spectral signatures (S1, ..., Sn) of the reception signal,
   - means (48) for comparing this computed spectral envelope (E+, E-) to the reference spectral envelope.

3. System (10, 30) for detecting the actuation of a function according to claim 2, wherein the comparison means (48) are configured to perform a similarity test between the computed spectral envelope (E+, E-) and the reference spectral envelope based on the following computation:

$$Cr = \begin{cases} \sum_{f \in F} sat(E^+ - Eref^+) + \sum_{f \in F} sat(E^- - Eref^-) + \\ \sum_{f \in F} sat(Eref^+ - E^+) + \sum_{f \in F} sat(Eref^- - E^-) \end{cases}$$

, where F denotes the band of frequencies f wherein the envelopes are defined, $E^+$ and $E^-$ the upper and lower parts of the computed spectral envelope, $Eref^+$ and $Eref^-$ the upper and lower parts of the reference spectral envelope, and sat() the function defined as follows:

$$\begin{cases} sat(x) = 0 & if \quad x < 0 \\ sat(x) = x & else \end{cases}$$

4. System (10, 30) for detecting the actuation of a function according to any of claims 1 to 3, wherein each spectral signature, reference and reception signal (S1, ..., Sn), is defined on the basis of the spectrum, of the corresponding reference signal and reception signal, computed in a pre-determined frequency band, the reference spectral envelope being computed in the same pre-determined frequency band.

5. System (10, 30) for detecting the actuation of a function according to claim 4, wherein the reference spectral envelope is computed only at frequencies of the pre-determined frequency band for which the amplitudes of the spectral signatures associated with the pre-determined path are greater than a minimum threshold, particularly a threshold set at 1% of the maximum peak of these signatures.

6. System (10, 30) for detecting the actuation of a function according to any of claims 1 to 5, wherein the pre-determined path (T; T1, T2, T3) is in the form on the touch-sensitive surface (24) of a ridge line formed using a tab (32) molded in the material of the touch-sensitive surface.

7. System (10, 30) for detecting the actuation of a function according to claim 6, wherein the tab (32) is formed by a local deformation of reduced thickness of the touch-sensitive surface (24) or of a thickness thinning toward the center of this local deformation.

8. System (10, 30) for detecting the actuation of a function according to any of claims 1 to 7, wherein the pre-determined path (T1, T2) is a line segment for embodying a cursor (T1) or linear wheel (T2) function.

9. System (10, 30) for detecting the actuation of a function according to any of claims 1 to 7, wherein the pre-determined path (T3) is a circle for embodying an annular wheel function.

10. Method for detecting the actuation of a pre-determined function, this actuation being executed by means of touch contact with a pre-determined path (T) associated with this function on a touch-sensitive surface (24) of an object, comprising:

   - transmission (100) in the touch-sensitive surface (24), by at least two separate sources (E1, E2), of mutually interfering bulk acoustic waves,
   - reception (102), by at least one receiver (R; R+, R-), of bulk acoustic waves after the propagation and interference thereof in the touch-sensitive surface (24), and supply of a reception signal on the basis of the acoustic waves received,
   - association of a plurality of reference spectral signatures with the pre-determined path (T), each of these spectral signatures being associated with a localization of a touch on the pre-determined path,

   **characterized in that** the detection (106) of the actuation of the pre-determined function is performed by comparing at least one spectral signature of the reception signal to a spectral envelope, or reference spectral envelope, of the plurality of reference spectral signatures associated with the pre-determined path (T), this spectral envelope corresponding to two spectral signatures, one being the upper part of the envelope and the other the lower part thereof.

## Figure 1

## Figure 2

## *Figure 3*

## *Figure 4*

## *Figure 5*

## *Figure 6*

## Figure 7

10, 30

## Figure 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6741237 B
- FR 2916545
- FR 2948471